**Europäisches Patentamt**

**European Patent Office**

**Office européen des brevets**

(19)

(11) Veröffentlichungsnummer: **0 475 966 B1**

(12)

# EUROPÄISCHE PATENTSCHRIFT

(45) Veröffentlichungstag der Patentschrift: **27.04.94**

(51) Int. Cl.5: **C09D 5/44**, C08G 18/58, C08G 18/10, C08G 59/40

(21) Anmeldenummer: **90908213.3**

(22) Anmeldetag: **25.05.90**

(86) Internationale Anmeldenummer:
**PCT/EP90/00843**

(87) Internationale Veröffentlichungsnummer:
**WO 90/15108 (13.12.90 90/28)**

Die Akte enthält technische Angaben, die nach dem Eingang der Anmeldung eingereicht wurden und die nicht in dieser Patentschrift enthalten sind.

(54) **VERFAHREN ZUR BESCHICHTUNG ELEKTRISCH LEITFÄHIGER SUBSTRATE.**

(30) Priorität: **07.06.89 DE 3918511**

(43) Veröffentlichungstag der Anmeldung:
**25.03.92 Patentblatt 92/13**

(45) Bekanntmachung des Hinweises auf die Patenterteilung:
**27.04.94 Patentblatt 94/17**

(84) Benannte Vertragsstaaten:
**AT BE CH DE DK ES FR GB IT LI NL SE**

(56) Entgegenhaltungen:
**EP-A- 0 199 663**
**EP-A- 0 296 489**
**EP-A- 0 304 854**
**US-A- 3 947 339**

(73) Patentinhaber: **BASF Lacke + Farben AG**
**Glasuritstrasse 1**
**D-48165 Münster-Hiltrup(DE)**

(72) Erfinder: **OTT, Günther**
**Von-Holte-Strasse 101 a**
**D-4400 Münster(DE)**
Erfinder: **HEIMANN, Ulrich**
**Schlagholz 28**
**D-4400 Münster(DE)**
Erfinder: **SANTURE, David J.**
**43650 NINE MILE ROAD**
**NOVI, MI 48375(US)**
Erfinder: **REITER, Udo**
**Regerstrasse 22**
**D-4404 Telgte(DE)**

(74) Vertreter: **Münch, Volker, Dr. et al**
**BASF Lacke + Farben AG**
**Patente/Lizenzen/Dokumentation**
**Postfach 61 23**
**D-48136 Münster (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Beschichten elektrisch leitfähiger Substrate, bei dem

(1) das Substrat in einen wäßrigen Elektrotauchlack, der als Bindemittel mindestens ein kationisches, aminmodifiziertes Epoxidharz enthält, eingetaucht wird

(2) das Substrat als Kathode geschaltet wird

(3) durch Gleichstrom ein Film auf dem Substrat abgeschieden wird

(4) das Substrat aus dem Elektrotauchlack entfernt wird und

(5) der abgeschiedene Lackfilm eingebrannt wird.

Die Erfindung betrifft auch einen wäßrigen Lack, der als Bindemittel ein kationisches, aminmodifiziertes Epoxidharz enthält, ein Verfahren zur Herstellung eines kationischen, aminmodifizierten Epoxidharzes und ein nach diesem Verfahren hergestelltes kationisches, aminmodifiziertes Epoxidharz.

Das oben beschriebene Verfahren ist bekannt (vgl. z.B. DE-OS-35 18 732, DE-OS-35 18 770 und US-PS-3,984,299) und wird insbesondere zur Grundierung von Automobilkarosserien eingesetzt. Die mit dem oben beschriebenen Verfahren erhältlichen Lackierungen sind hinsichtlich Schichtdicke, Verlaufseigenschaften, Steinschlagresistenz, Flexibilität, Haftungseigenschaften und Korrosionsschutz auf nicht vorbehandeltem Blech verbesserungsbedürftig.

Außerdem ist es wünschenswert, bei dem oben beschriebenen Verfahren Elektrotauchlacke mit einem sehr geringen Anteil an organischen Lösemitteln einzusetzen.

Die der vorliegenden Erfindung zugrundeliegende Aufgabenstellung besteht in der Bereitstellung eines neuen Verfahrens gemäß Oberbegriff des Patentanspruchs 1, mit dem Lackierungen erhalten werden können, die die oben beschriebenen Nachteile des Standes der Technik nicht bzw. in vermindertem Ausmaß aufweisen.

Diese Aufgabe wird überraschenderweise durch ein Verfahren gelöst, bei dem

(1) das Substrat in einem wäßrigen Elektrotauchlack, der als Bindemittel mindestens ein kationisches, aminmodifiziertes Epoxidharz enthält, eingetaucht wird, wobei das kationische, aminmodifizierte Epoxidharz erhältlich ist, indem

(A) eine Verbindung, die pro Molekül durchschnittlich 1,0 bis 5,0 vorzugsweise 1,2 bis 2,5, besonders bevorzugt 2,0 Epoxidgruppen enthält oder eine Mischung aus solchen Verbindungen und

(B) ein organisches Amin oder ein Gemisch aus organischen Aminen und

(C) ein urethangruppenhaltiges Addukt, das erhältlich ist, indem

(c1) ein Polyether- oder Polyesterpolyol mit einem zahlenmittleren Molekulargewicht von 400 bis 5000, vorzugsweise 600 bis 2000, oder ein Gemisch aus solchen Polyether- und/oder Polyesterpolyolen,

(c2) ein Polyisocyanat oder ein Gemisch aus Polyisocyanaten und

(c3) eine Verbindung, die mindestens ein gegenüber Isocyanatgruppen reaktives Wasserstoffatom und mindestens eine Ketimingruppe im Molekül enthält oder ein Gemisch aus solchen Verbindungen

miteinander umgesetzt werden und/oder

(D) ein uretahngruppenhaltiges Addukt, das erhältlich ist, indem in der Komponente (C) mindestens eine Ketimingruppe durch Hydrolyse in eine primäre Aminogruppe überführt wird,

in einem solchen Mengenverhältnis miteinander umgesetzt werden, daß 20 bis 90, vorzugsweise 60 bis 80 % der Epoxidgruppen der Komponente (A) mit der Komponente (B) und die verbleibenden Epoxidgruppen mit der Komponente (C) und/oder (D) umgesetzt werden und das so erhaltene Reaktionsprodukt - falls noch notwendig - zumindest teilweise protoniert wird,

(2) das Substrat als Kathode geschaltet wird,

(3) durch Gleichstrom ein Film auf dem Substrat abgeschieden wird,

(4) das Substrat aus dem Elektrotauchlack entfernt wird und

(5) der abgeschiedene Lackfilm eingebrannt wird, und das

dadurch gekennzeichnet ist, daß als Komponente (A) eine Verbindung eingesetzt wird, die erhältlich ist, Die nach dem erfindungsgemäßen Verfahren hergestellten Lackierungen zeichnen sich durch hohe Schichtdicken, gute Verlaufseigenschaften, hohe Steinschlagresistenz, hohe Flexibilität, gute Haftungseigenschaften und guten Korrosionsschutz auf nicht vorbehandeltem Blech aus. Ein weiterer wichtiger Vorteil des erfindungsgemäßen Verfahrens besteht darin, daß die eingesetzten Elektrotauchlacke mit einem im Vergleich zum Stand der Technik sehr niedrigen Gehalt an organischen Lösemitteln Lackierungen mit den oben beschriebenen guten Eigenschaften liefern.

Die erfindungsgemäß eingesetzten kationischen, aminmodifizierten Epoxidharze sind erhältlich, indem die Komponenten (A) und (B) und (C) und/oder (D) in einem solchen Mengenverhältnis miteinander umgesetzt werden, daß 20 bis 90, vorzugsweise 60 bis 80 %, der Epoxidgruppen der Komponente (A) mit der Komponente (B) und die verbleibenden Epoxidgruppen mit der Komponente (C) und/oder (D) umgesetzt werden und das so erhaltene Reaktionsprodukt - falls notwendig - zumindest teilweise protoniert wird. Die Umsetzung der Komponenten (A), (B), (C) und/oder (D) wird in einem organischen Lösemittel (z.B. Xylol, Butylglykol, Butanol usw.) oder in einem Gemisch aus organischen Lösemitteln bei Temperaturen von 20 bis 160°C, vorzugsweise 80 bis 130°C, durchgeführt. Wenn als Komponente (C) und/oder (D) eine ketimingruppenhaltige Substanz eingesetzt wird, dann ist es zweckmäßig, die Umsetzung in Gegenwart von Wasser und/oder einer Brønsted-Säure durchzuführen. Es ist bevorzugt, in einem ersten Schritt die Komponenten (A) und (B) zu einem epoxidgruppenhaltigen Zwischenprodukt umzusetzen und dieses Zwischenprodukt dann in einem zweiten Schritt mit der Komponente (C) und/oder (D) umzusetzen. Prinzipiell ist es auch möglich - aber weniger bevorzugt -, aus den Komponenten (A) und/oder (C) und/oder (D) ein epoxidgruppenhaltiges Zwischenprodukt herzustellen, das in einem zweiten Schritt mit der Komponente (B) weiter umgesetzt wird. Bei dieser Vorgehensweise müssen geeignete Maßnahmen (z.B. geringer Gehalt an (potentiellen) primären Aminogruppen in der Komponente (C) und/oder (D), niedrige Reaktionstemperatur ...) ergriffen werden, damit keine gelierten Produkte erhalten werden. Das erhaltene Reaktionsprodukt wird - falls noch notwendig (eine Protonierung ist z.B. nicht notwendig, wenn als Komponente (B) ein Aminsalz eingesetzt wird oder wenn die Umsetzung mit der Komponente (C) und/oder (D) in Gegenwart einer ausreichenden Menge einer Brønsted-Säure durchgeführt wird) - mit einer Brønsted-Säure zumindest teilweise protoniert und in eine wäßrige Phase überführt. Aus der so erhaltenen Dispersion kann dann nach allgemein gut bekannten Methoden ein Elektrotauchlack hergestellt werden.

Als Komponente (A) können alle Verbindungen, die pro Molekül durchschnittlich 1,0 bis 5,0, vorzugsweise 1,2 bis 2,5, besonders bevorzugt 2,0, Epoxidgruppen enthalten und erhältlich sind, indem

(i) eine Diepoxidverbindung oder ein Gemisch aus Diepoxidverbindungen mit einem Epoxidäquivalentgewicht unter 2000 mit

(ii) einer Verbindung, die eine phenolische Hydroxylgruppe oder eine Thiolgruppe im Molekül enthält,

so umgesetzt wird, daß ein Reaktionsprodukt erhalten wird, in dem die Komponenten (i) und (ii) in einem Molverhältnis von 2:1 bis 10:1, vorzugsweise 2:1 bis 4:1, besonders bevorzugt 2:1, eingebaut sind oder Mischungen aus solchen Verbindungen eingesetzt werden. Die Komponente (A) sollte ein zahlenmittleres Molekulargewicht von 112 bis 5000, vorzugsweise 800 bis 3000, aufweisen.

Als Komponente (B) können primäre und/oder sekundäre Amine eingesetzt werden.

Das als Komponente (B) eingesetzte Amin sollte vorzugsweise wasserlöslich sein. Als Beispiele für einsetzbare Amine werden genannt: Mono- und Dialkylamine, wie Methylamin, Ethylamin, Propylamin, Butylamin, Dimethylamin, Diethylamin, Dipropylamin, Methylbutylamin und dergleichen, Alkanolamine, wie z.B. Methylethanolamin, Diethanolamin und dergleichen, und Dialkylaminoalkylamine, wie z.B. Dimethylaminoethylamin, Diethylaminopropylamin, Dimethylaminopropylamin und dergleichen. In den meisten Fällen werden niedermolekulare Amine verwendet, doch ist es auch möglich, höhermolekulare Monoamine oder Mischungen aus niedermolekularen und höhermolekularen Aminen einzusetzen.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Als Komponente (B) können auch Salze von primären, sekundären und tertiären Aminen eingesetzt werden. Zur Neutralisation der Amine geeignete Säuren schließen Borsäure oder andere Säuren mit einer größeren Dissoziationskonstanten als Borsäure ein, bevorzugt organische Säuren mit einer Dissoziationskontanten von größer als etwa $1 \times 10^{-5}$. Die bevorzugte Säure ist Milchsäure. Beispiele von anderen Säuren sind Ameisensäure, Essigsäure, Propionsäure, Buttersäure, Salzsäure, Phosphorsäure, Schwefelsäure und Kohlensäure. Der Aminanteil des Amin-Säuresalzes ist vorzugsweise ein tertiäres Amin, wie z.B. Dimethylethanolamin, Triethylamin, Trimethylamin, Triisopropylamin und dergleichen.

Als Komponente (C) wird ein urethangruppenhaltiges Addukt eingesetzt, das erhältlich ist, indem

(c1) ein Polyether- oder Polyesterpolyol mit einem zahlenmittleren Molekulargewicht von 400 bis 5000, vorzugsweise 600 bis 2000, oder ein Gemisch aus solchen Polyether- und/oder Polyesterpolyolen,

(c2) ein Polyisocyanat oder ein Gemisch aus Polyisocyanaten und

(c3) eine Verbindung, die mindestens ein gegenüber Isocyanatgruppen reaktives Wasserstoffatom und mindestens eine Ketimingruppe im Molekül enthält oder ein Gemisch aus solchen Verbindungen

miteinander umgesetzt werden.

Die Komponenten (c1), (c2) und (c3) können zur Herstellung der Komponente (C) sowohl in Substanz als auch in einem gegenüber Isocyanatgruppen inerten Lösemittel oder Lösemittelgemisch, ggf. bei erhöhten Temperaturen, vorzugsweise bei 40 bis 100°C, miteinander umgesetzt werden. Die Umsetzung kann durch Zugabe von Katalysatoren wie z.B. Dibutylzinndilaurat katalysiert werden.

Die Komponenten (c1), (c2) und (c3) werden in einem solchen Mengenverhältnis miteinander umgesetzt, daß auf ein Äquivalent Isocyanatgruppen 0,75 bis 1,5, vorzugsweise 0,9 bis 1,1, besonders bevorzugt 1,0, Äquivalente von gegenüber Isocyanatgruppen reaktiven Wasserstoffatomen kommen. Wenn als Komponente (c1) ein Polyether- oder Polyesterdiol und als Komponente (c2) ein Diisocyanat eingesetzt wird, dann werden vorzugsweise n Mol der Komponente (c1), n+1 Mol der Komponente (c2) und 2 Mol der Komponente (c3) miteinander umgesetzt.

Es ist bevorzugt, als Komponente (c1) ein Polyether- oder Polyesterdiol oder ein Gemisch aus Polyether- und/oder Polyesterdiolen und als Komponente (c2) ein Diisocyanat oder ein Gemisch aus Diisocyanaten einzusetzen. Es können auch höher funktionelle Polyether- und/oder Polyesterpolyole und/oder Polyisocyanate eingesetzt werden. In solchen Fällen ist aber dafür Sorge zu tragen - z.B. durch Zumischung von monofunktionellen Reaktionspartnern -, daß es nicht zu einer Gelierung der Reaktionsmischung kommt.

Für die Reihenfolge, in der die Komponenten (c1), (c2) und (c3) umgesetzt werden können, gibt es mehrere Möglichkeiten: So kann z.B. in einer ersten Stufe aus den Komponenten (c1) und (c2) ein endständige Isocyanatgruppen aufweisendes Präpolymer hergestellt werden, dessen Isocyanatgruppen dann in einer zweiten Stufe mit der Komponente (c3) umgesetzt werden. Es ist aber auch möglich, die Komponenten (c1) und (c3) vorzulegen und die Komponente (c2) langsam zuzugeben. Eine dritte Variante besteht darin, daß in einer ersten Stufe aus den Komponenten (c2) und (c3) ein isocyanatgruppenhaltiges Vorprodukt hergestellt wird, das dann in einer zweiten Stufe mit der Komponente (c1) umgesetzt wird.

Die Komponente (D) kann erhalten werden, indem in der Komponente (C) mindestens eine Ketimingruppe durch Hydrolyse in eine primäre Aminogruppe überführt wird. Das geschieht zweckmäßigerweise durch Zugabe von Wasser zu dem aus (c1), (c2) und (c3) erhaltenen Reaktionsprodukt.

Als Komponente (c1) wird ein Polyether- oder Polyesterpolyol mit einem zahlenmittleren Molekulargewicht von 400 bis 5000, vorzugsweise 600 bis 2000, oder ein Gemisch aus solchen Polyether- und/oder Polyesterpolyolen eingesetzt. Als Komponente (c1) wird vorzugsweise ein Polyether- oder Polyesterdiol mit einem Zahlenmittleren Molekulargewicht von 400 bis 5000, vorzugsweise 600 bis 2000, oder ein Gemisch aus solchen Polyether- und/oder Polyesterdiolen eingesetzt. Besonders bevorzugt werden Polyetherdiole mit einem zahlenmittleren Molekulargewicht von 400 bis 5000, vorzugsweise 600 bis 2000, als Komponente (c1) eingesetzt.

Als Beispiele für geeignete Polyetherpolyole werden aliphatische Polyetherdiole der allgemeinen Formel H-(-O(CHR)$_n$-)$_m$-OH genannt. R = Wasserstoff oder ein niedriger Alkylrest, n = 2 bis 6, bevorzugt 3 bis 4, und m = 2 bis 100, bevorzugt 5 bis 50. Es können lineare oder verzweigte Polyetherpolyole wie Poly-(ethylenoxid), Poly(propylenoxid), Poly(butylenoxid) und/oder durch Copolymerisation von Ethylenoxid mit Propylenoxid erhältliche Polyetherpolyole als Komponente (c1) eingesetzt werden. Besonders bevorzugt werden Poly(propylenoxid) und Copolymere aus Ethylenoxid und Propylenoxid mit einem zahlenmittleren Molekulargewicht von 600 bis 2000 als Komponente (c1) eingesetzt.

Es können Selbstverständlich auch Mischungen aus unterschiedlichen Polyetherpolyolen als (c1)-Komponente eingesetzt werden.

Es können auch Polyesterpolyole, insbesondere Polyesterdiole, mit einem zahlenmittleren Molekulargewicht von 400 bis 5000, vorzugsweise 600 bis 2000, als Komponente (A) eingesetzt werden.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromtische Dicarbonsäuren oder Diole sein.

Die zur Herstellung der Polyester verwendeten Diole bestehen beispielsweise aus Alkylenglykolen wie Ethylenglykol, Propylenglykol, Butylenglykol, Butandiol-1,4, Hexandiol-1,6, Neopentylglykol und anderen Diolen wie Dimethylolcyclohexan. Die Säurekomponente des Polyesters besteht in erster Linie aus niedermolekularen Dicarbonsäuren oder ihren Anhydriden mit 2 bis 30, bevorzugt 4 bis 18, Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäure. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid, an ungesättigten Fettsäuren anwesend sein.

Erfindungsgemäß werden auch Polyesterdiole eingesetzt, die durch Umsetzung eines Lactons mit einem Diol erhalten werden. Sie zeichnen sich durch die Gegenwart einer endständigen Hydroxylgruppe und wiederkehrende Polyesteranteile der Formel $CO-(CHR)_n-CH_2-O$ aus. Hierbei ist n bevorzugt 4 bis 6 und der Substituent R Wasserstoff, ein Alkyl-, Cycloalkyl- oder Alkoxyrest. Kein Substituent enthält mehr als 12 Kohlenstoffatome. Als Beispiele werden genannt Poly(hydroxycapronsäure), Poly(hydroxybuttersäure), Poly-(hydroxydecansäure) und Poly(hydroxystearinsäure). Für die Herstellung der Polyesterdiole wird das unsubstituierte $\epsilon$-Caprolacton, bei dem n den Wert 4 hat und alle R-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten wie Ethylendiamin, Alkyldialkanolamine oder auch Harnstoff mit Caprolacton umgesetzt werden.

Als Komponente (c2) können aliphatische, cycloaliphatische und/oder aromatische Polyisocyanate mit mindestens zwei Isocyanatgruppen pro Molekül eingesetzt werden. Als Komponente (c2) werden vorzugsweise Diisocyanate eingesetzt. Als aromatische Diisocyanate eignen sich Phenylendiisocyanat, Toluylendiisocyanat, Xylylendiisocyanat, Biphenylendiisocyanat, Naphthylendiisocyanat und Diphenylmethandiisocyanat.

Aufgrund ihrer guten Beständigkeit gegenüber ultra-violettem Licht ergeben (cyclo)aliphatische Diisocyanate Produkte mit geringer Vergilbungsneigung. Beispiele hierfür sind Isophorondiisocyanat, Cyclopentylendiisocyanat sowie die Hydrierungsprodukte der aromatischen Diisocyanate, wie Cyclohexylendiisocyanat, Methylcyclohexylendiisocyanat, und Dicyclohexylmethandiisocyanat. Aliphatische Diisocyanate sind Verbindungen der Formel $OCN-(CR_2)_r\ NCO$, worin r eine ganze Zahl von 2 bis 20, insbesondere 6 bis 8, ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat.

Es können selbstverständlich auch Mischungen aus unterschiedlichen Polyisocyanaten eingesetzt werden.

Als Komponente (c3) werden Verbindungen, die ein gegenüber Isocyanatgruppen reaktives Wassestoffatom und mindestens eine Ketimingruppe im Molekül enthalten, eingesetzt. Diese Verbindungen können nach allgemein gut bekannten Methoden durch Umsetzung von Verbindungen, die ein gegenüber Isocyanatgruppen reaktives. Wasserstoffatom und mindestens eine primäre Aminogruppe im Molekül enthalten, mit Ketonen erhalten werden. Als Beispiele für Verbindungen, die ein gegenüber Isocyanatgruppen reaktives Wasserstoffatom und mindestens eine primäre Aminogruppe im Molekül enthalten, werden Verbindungen, die eine sekundäre Aminogruppe und mindestens eine primäre Aminogruppe im Molekül enthalten (z.B. N-Alkylalkylendiamine wie N-Methylethylendiamin und Polyalkylenpolyamine wie Diethylentriamin) sowie Verbindungen der allgemeinen Formel $H_2N-CR_1R_2-R_3-O(CHR_4-CHR_5-O)_n-H$ genannt. In dieser Formel stehen $R_1$ und $R_2$ für Wasserstoff, Alkyl- oder $-CH_2OH$-Gruppen, $R_3$ steht für einen linearen oder verzweigten Alkylenrest, insbesondere für einen Alkylenrest mit 1 bis 3 Kohlenstoffatomen, $R_4$ und $R_5$ stehen für Wasserstoff oder Alkylreste mit 1 bis 4 Kohlenstoffatomen und $n = 0$ bis 5. Als Beispiele werden konkret genannt: Ethanolamin, Propanolamin, Butanolamin, 2-Amino-2- methyl-propanol-1 $(H_2N-C(CH_3)_2-CH_2OH)$, 2-Amino-2- ethyl-propanol-1 und ethoxyliertes und/oder propoxyliertes Ethanolamin oder Propanolamin wie z.B. 2,2'-Aminoethoxyethanol $(H_2N-CH_2CH_2-O-CH_2-CH_2-OH)$ und Diethylenglycolmono-(3-aminopropyl)ether $(H_2N-(CH_2)_3-O-CH_2-CH_2-O-CH_2-CH_2-OH)$. Es können auch Aminophenole eingesetzt werden. Diese sind jedoch weniger bevorzugt. Die primären Aminogruppen der Verbindungen, die ein gegenüber Isocyanatgruppen reaktives Wasserstoffatom und mindestens eine primäre Aminogruppe im Molekül enthalten, werden nach allgemein gut bekannten Methoden (vgl. z.B. DE-OS-35 19 953) mit Ketonen in Ketimingruppen überführt. Als Ketone können z.B. eingesetzt werden: Aceton, Methylethylketon, Diethylketon, Methylpropylketon, Methylisopropylketon, Methyl-n-butylketon, Methylisobutylketon, Ethylisopropylketon, Cyclohexanon, Cyclopentanon, Acetophenon. Besonders bevorzugte Ketone sind Aceton, Methylethylketon und Methylisobutylketon.

Die erfindungsgemäßen kationischen, aminmodifizierten Epoxidharze können sowohl als fremdvernetzende als auch als selbstvernetzende Harze eingesetzt werden. Selbstvernetzende Harze sind z.B. durch Umsetzung mit teilblockierten Polyisocyanaten, die im Durchschnitt eine freie Isocyanatgruppe pro Molekül enthalten, erhältlich. Die erfindinngsgemäßen kationischen, aminmodifizierten Epoxidharze werden vorzugsweise als fremdvernetzende Harze eingesetzt.

Die wäßrigen Dispersionen der erfindinngsgemäßen kationischen, aminmodifizierten Epoxidharze können nach gut bekannten Methoden zu Elektrotauchlacken weiterverarbeitet werden. Sie werden dazu ggf. mit mindestens einem Vernetzungsmittel, Pigmenten, Füllstoffen und sonstigen allgemein gut bekannten Zusätzen wie z.B. Entschäumungsmittel, Zusatzlösemittel, Antioxidantien, oberflächenaktive Mittel, Verlaufhilfsmittel usw. gemischt.

Beispiele für geeignete Vernetzungsmittel sind Phenoplaste, polyfunktionelle Mannichbasen, Melaminharze, Benzoguanaminharze und blockierte Polyisocyanate. Als Vernetzungsmittel werden vorzugsweise blockierte Polyisocyanate eingesetzt.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat 4,4' und 2,4' Diphenylmethandiisocyanat sowie Mischung aus 4,4' und 2,4' Diphenylmethandiisocyanat und 1-Isocyanatomethyl-5-isocyanat -1,3,3-trimethylcylohexan. Es können auch Polyissocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen.Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten. Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cy- cloaliphatische Alkohole wie Cyclopentanol und Cyclo- hexanol; aromatische Alkylalkohole wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Das Vernetzungsmittel wird in der Regel in einer Menge von 5 bis 60 Gew. -%, bevorzugt 20 bis 40 Gew. -%, bezogen auf das kationische aminmodifizierte Epoxidharz, eingesetzt.

Pigmente werden vorzugsweise in Form von Pigmentpasten in die wäßrige Dispersion der kationischen, aminmodifizierten Epoxidharze eingearbeitet.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961)).

Die Pigmentpasten können im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet weden. Als farbige Pigmente können beispielsweise Cadmiumgelb, Cadmiumrot, Ruß, Phthalocyaninblau, Chromgelb, Toluidylrot und hydradisiertes Eisenoxid benutzt werden.

Die Pigmentpaste kann neben den Pigmenten auch noch Weichmacher, Füllstoffe, Netzmittel usw. enthalten.

Der Festkörper der erfindungsgemäß eingesetzten Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 4 und 8, vorzugsweise zwischen 5 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z.B. zwischen 2 und 1000 Volt liegen. Typischerweise wird aber mit Spannungen zwischen 50 und 500 Volt gearbeitet. Die Stromdichte liegt in der Regel zwischen etwa 10 und 100 Ampere/m$^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen wie Stahl, Aluminium, Kupfer und dergleichen eingesetzt werden.

Die erfindungsgemäßen wäßrigen Lacke können auch durch Spritzen, Streichen, Rakeln usw. sowohl auf elektrisch leitende als auch auf elektrisch nichtleitende Substrate aufgebracht werden.

Die Erfindung wird in den folgenden Beispielen näher erläutert. Alle Angaben über Teile und Prozentsätze sind Gewichtsangaben, falls nicht ausdrücklich etwas anderes festgestellt wird.

I. Darstellung von urethangruppenhaltigen Addukten C

1. Ketiminhaltiges Vorprodukt c3 - 1 In einem geeigneten Reaktor, ausgestattet mit Rührer, Inertgaseinleitung, Wasserabscheider und Rückflußkühler werden 1.100 g 2.2'-Aminoethoxyethanol ($H_2N$-$CH_2$-$CH_2$-0-$CH_2$-$CH_2$-OH) und 1886 g Methylisobutylketon vorgelegt und in einer Stickstoffatmosphäre unter Rühren langsam aufgeheizt. Bei 109 °C tritt ein erster merklicher Destillationsfluß ein, bei dem das erste Kondensationswasser abgeschieden wird. Man steigert im Laufe der Reaktion die Temperatur in kleinen Schritten innerhalb 3 Std. auf 142 °C und hält auf dieser Temperatur, bis die Reaktion zum Erliegen kommt und 189 g Wasser ausgekreist sind. Anschließend wird auf 40 °C gekühlt und unter Stickstoff ausgetragen.

Die erkaltete Lösung weist ein Aminäquivalentgewicht von 265 auf.

2. Ketiminhaltiges Vorprodukt c3-2

In der unter I.1 beschriebenen Weise werden 836 g Ethanolamin ($H_2N$-$CH_2$-$CH_2$-OH) und 2.210 g Methylisobutylketon umgesetzt bis 150 g Wasser ausgekreist sind. Die Lösung hat ein Aminäquivalentgewicht von 199,5.

3. Urethangruppenhaltiges Addukt C-1 In einem Reaktionsgefäß mit Wasserabscheider und Rückflußkühler, Rührer und Inertgaseneinleitung werden 1.154,3 g Polypropylenglykol mit einem mittleren Molekulargewicht von 900 (Lubrimet P 900, Fa. BASF) zusammen mit 208,3 g Methylisobutylglykol vorgelegt. Zur Entfernung von Wasserspuren wird zunächst auf 68 °C erwärmt und unter leichtem Vakuum 30 min lang unter Rückfluß destilliert. Sodann gibt man 0,9 g. Dibutylzinndilaurat zu und läßt 720,0 g Desmodur W[1])(Fa. Bayer) in der Weise zutropfen, daß die Temperatur zwischen 68 und 60 °C bleibt. Man hält in diesem Temperaturbereich bis die Reaktionslösung ein Isocyanatäquivalentgewicht von 670 (bezogen auf Festanteile) erreicht hat. Sodann läßt man 713,3 g c3-1 innerhalb von 10 min. unter Kühlung zulaufen und rührt bei 60 °C bis IRspektroskopisch keine Isocyanatgruppen mehr nachweisbar sind. Anschließend kühlt man und verdünnt mit 120 g Butylglykol und 80 g Methylisobutylketon. Die Lösung hat einen theoretischen Festgehalt von 80 % und einen Basengehalt von 0,9 meq/g Festharz. Die Viskosität einer 60 %-igen Lösung (verdünnt mit Solvenon PM (Fa. BASF) und gemessen an einem Platte-Kegel-Viskosimeter) liegt bei 5,1 dPas.

4. Urethangruppenhaltiges Addukt C-2 Analog der zuvor beschriebenen Weise werden 1.403 g Polyetherdiol Pluriol PE 3100[1] in 230 g Methylisobutylketon gelöst, durch Azeotropdestillation entwässert und mit 668 g Desmodur W[2] - (Isocyanatäquivalentgewicht 131, Fa. Bayer) bis zu einem Isocyanatäquivalentgewicht von 852 (bezogen auf Festanteile) umgesetzt. Anschließend wird mit 633 g Vorprodukt c3-1 reagiert, bis keine Isocyanatgruppen mehr nachweisbar sind (IR-Spektrum). Dann wird mit 128 g Butylglykol und 104 g Methylisobutylketon verdünnt. Die Lösung hat eine theoretischen Pestgehalt von 80 %, der Basengehalt liegt bei 0,82 meq/g Festharz. Die Viskosität (60 %-ige Verdünnung mit Solvenon PM, Platte Kegel-Viskosimeter) liegt bei 7,2 d Pas.

(1) Fa. BASF; Polyetherdiol auf Basis von Ethylenoxid und Propylenoxid mit mittlerem Molekulargewicht von ca. 1.100

(2) Desmodur W = Dicyclohexylmethandiisocyanat

5. Urethangruppenhaltiges Addukt C-3

In der unter I.3 beschriebenen Weise wird aus

1.061 g Polycaprolactondiol Capa 200 (OH-Zahl 198; Fa. Interox)

210 g Methylisobutylketon

0,9 g Dibutylzinndilaurat

831 g Isophorondiisocyanat (NCO-Äquivalentgewicht 111)

eine Vorstufe hergestellt, die bei einem NCO-Äquivalentgewicht von 510 (bezogen auf Feststoff 90 %) mit 709 g des ketiminhaltigen Vorproduktes c3-2 weiter umgesetzt wird bis zu einem Isocyanatgehalt von 0. Nach Verdünnung mit 189 g Methylisobutlyketon hat die Lösung einen theoretischen Festgehalt von 80 % und einen Basengehalt von 1,30 meq/g Festharz. Die Viskosität einer 60 %-igen Probe liegt bei 4,2

[1]) Desmodur W = Dicyclohexylmethandiisocyanat

dPas (verdünnt mit Solvenon PM[1], gemessen am Platte-Kegel-Viskosimeter).

II. Darstellung von aminmodifizierten Epoxidharzen

1. Harz 1 In einem geeigneten Reaktor werden 1.359 g Epoxidharz auf Basis Bisphenol A mit einem EEW[*]von 490 und 81 g Xylol vorgelegt und unter Stickstoffatmosphäre auf 108 °C aufgeheizt. Sobald die Schmelze klar ist, werden 182 g Dodecylphenol zugegeben, und die Mischung wird durch azeotrope Rückflußdestillation mit Hilfe eines Wasserabscheiders unter Vakuum innerhalb 30 min von Wasserspuren befreit. Sodann gibt man 2,3 g N,N-Dimethylbenzylamin zu und heizt auf 130 °C auf. Das Reaktionsgemisch wird auf dieser Temperatur gehalten, bis das EEW einen Wert von 1.110 erreicht hat (ca. 3,5 Std.)

Man gibt nun 139 g Butylglykol, 102 g Diethanolamin und 141 g Xylol zu und kühlt währenddessen auf 90 °C ab. 1 Stunde später gibt man 894 g des urethangruppenhaltigen Adduktes C-1, 139 g Dowanol PPH[1](Fa. Dow Chemicals), 42 g Eisessig und 12 g H$_2$O zu und läßt bei 90 °C weiterreagieren, bis keine Viskositätszunahme mehr feststellbar ist (ca. 2 Std). Sodann kühlt man und verdünnt mit 108 g Isobutanol. Die Harzlösung hat einen Festkörper von 71,4 % (1 Std bei ca. 130 °C gemessen) und einen Basengehalt von 0,71 meq/g Festharz.

2. Harz 2 Analog zum vorstehend beschriebenen Beispiel werden 1.351 g Epoxidharz auf Basis Bisphenol A (EEW 490; Fa. Shell) und 81 g Xylol unter Stickstoff bei 110 °C unter Rühren aufgeschmolzen, Nach Zugabe von 181 g Dodecylphenol werden unter Vakkum bei 111 °C Restwasserspuren azeotrop ausgekreist. Dann heizt man auf 130 °C auf und gibt währenddessen 2.4 g N,N-Dimethylbenzylamin zu. Man hält die Mischung ca. 4 Std. auf dieser Temperatur, bis das EEW auf 1.109 gestiegen ist. Dann gibt man 190 g Xylol und 101 g Diethanolamin zu und kühlt gleichzeitig die leicht exotherm reagierende Mischung auf 90 °C ab. Nachdem das Diethanolamin 1 Std. reagiert hat, werden 1.085 g des urethanhaltigen Ketiminaddukts C-2 und 12 g entionisiertes Wasser zugegeben. Anschließend läßt man die Mischung 2 Std. bei 90 °C reagieren, kühlt auf 70 °C ab und trägt ohne weitere Verdünnung aus.

Das Harz hat einen Festgehalt von 83,1 % (1 Std. bei 130 °C gemessen) und einen Basengehalt von 0,67 meq/g Festharz.

3. Harz 3 In einem Reaktor werden 1.107 g eines Epoxidharzes auf Basis Bisphenol A mit einen EEW von 188 zusammen mit 335 g Bisphenol A, 168 g Nonylphenol und 85 g Xylol vorgelegt und unter Stickstoffatmosphäre und unter Rühren auf 130 °C aufgeheizt. Dann gibt man 0,8 g Triphenylphosphin zu, worauf die Temperatur auf 152 °C steigt. Nach Abklingen der exothermen Reaktion läßt man die Temperatur auf 130 °C absinken und gibt 3,2 g N,N-Dimethylbenzylamin zu. Sobald das EEW auf 1.096 an gestiegen ist, wird die Reaktionsmischung mit 102 g Butylglykol und 243 g Xylol verdünnt und auf 90 °C gekühlt. Sodann gibt man 108 g Diethanolamin zu, läßt 1 Stunde lang bei 90 °C reagieren und gibt 708 g des urethanhaltigen Addukts auf Basis Polycaprolactondiol C-3 und 13 g H$_2$O zu. Anschließend wird 2 Stunden bei 80 °C gerührt und nach kurzer Kühlung mit 332 g Isobutanol verdünnt. Das Harz hat einen Festgehalt von 71,2 % (1 Std. bei 130 °C gemessen) und einen Basengehalt von 0,79 meq/g Festharz.

III. Darstellung von Vernetzungsmitteln

1. Vernetzer 1 In einem Reaktor, der mit einem Rührer, Rückflußkühler, Innenthermometer und Inertgaseinleitung ausgestattet ist, werden 1.133 g Toluylendiisocyanat (Mischung aus etwa 80 % 2,4- und 20 % 2,6-Isomeren) und 356 g Methylisobutylketon unter Stickstoffatmosphäre vorgelegt. Man gibt 0,7 g Dibutylzinndilaurat zu und trägt innerhalb von 4 Stunden 290 g Trimethylolpropan in Form kleiner Portionen in gleichen Zeitabständen ein. Die Kühlung wird so einreguliert, daß die Temperatur der Reaktionsmischung nicht über 45 °C steigt. 30 min. nach Zugabe der letzten Portion Trimethylolpropan wird ein

[1] Solvenon PM = Monoether des Propylenglycols

[*] EEW = Epoxidäquivalentgewicht in Gramm pro Äquivalent. Sofern nicht anders angegeben, bezieht sich im Folgenden das EEW von Lösungen auf die darin enthaltenen Festanteile.

[1] Dowanol PPH = Propylenglycolmonophenylether

NCO-Äquivalentgewicht von 217 gemessen (bezogen auf Festanteile). Unter weiterer Kühlung läßt man nun innerhalb 1 Std. 722 g n-Propylglykol zutropfen. Am Ende der Zugabe ist die Temperatur auf 86 °C angestiegen. Man erwärmt nun auf 100° C und läßt eine weitere Stunde nachreagieren. Bei der anschließenden Kontrolle sind keine NCO-Gruppen mehr nachweisbar. Man kühlt nun ab und verdünnt mit 500 g Methylisobutylketon. Die Lösung dieses Polyurethanvernetzers hat einen Feststoffgehalt von 69,8 % (1 Std. bei 130 °C gemessen).

2. Vernetzer 2 In einem Reaktor, wie er im vorstehenden Beispiel beschrieben ist, werden unter Stickstoffatmosphäre 1.146 g trimerisiertes Hexamethylendiisocyanat mit einem NCO-Äquivalentgewicht von 191 ("Basonat PLR 8638", Fa. BASF) und 339 g Methylisobutylketon unter Rühren auf 50 °C erwärmt. Während 4 Std. werden nun 774 g Di-n-butylamin zugetropft. Die Temperatur wird dabei durch Kühlung unter 55 °C gehalten. Die Vernetzerlösung wird anschließend gekühlt und mit weiteren 141 g Methylisobutylketon verdünnt. Der Festgehalt liegt bei 69,5 % (1 Std. bei 130 °C gemessen).

3. Vernetzer 3 Entsprechend der am 11.11.1987 beim Deutschen Patentamt unter P 37 38 218.7 eingereichten Patentanmeldung (Beispiel 1) wird ein Vernetzer mit aktivierten Estergruppen dargestellt.

In einem geeigneten Reaktionsgefäß werden 1.035 g Azelainsäure in Gegenwart von 57 g Xylol unter Inertgas bei 110 °C aufgeschmolzen. Zu der nunmehr klaren Lösung werden sodann 1,3 g AMC-2 (Katalysator auf der Basis von CrIII-oktoat, Handelsprodukt der Gordova Chemicals) zugegeben und 876 g eines Epoxidharzes auf Basis Bisphenol A (Epoxidäquivalentgewicht 188) portionsweise innerhalb von 30 min unter Rühren eingetragen und einreagiert. Anschließend wird bei 140 - 180 °C das anfallende Kondensationswasser über einen Wasserabscheider ausgekreist, Die Temperatur wird bei 180 °C gehalten bis die Säurezahl des Reaktionsgemisches auf 285 abgefallen ist. Anschließend läßt man auf 115 ° abkühlen, gibt 4,0 g des obengenannten Katalysa- tors zu und tropft innerhalb von 1,5 h 1.324 g 2-Ethylhexylglycidether zu. Die Reaktion wird bei 115 °C fortgesetzt bis die Säurezahl kleiner 1 mg KOH/g Festkörper und das EEW größer 10.000 ist. Man erhält eine klare, grünstichige Harzlösung, die nach kurzem Kühlen ohne weiteres Verdünnen ausgetragen wird. Der Vernetzer besitzt einen Feststoffgehalt von 95,6 % (1 h bei 130 °C) und eine Viskosität von 2,5 dPas (70 %ig in Methylisobutylketon).

IV. Herstellung wässriger Bindemitteldispersionen.

Die Herstellung der wässrigen Bindemitteldispersionen erfolgt aus den in der nachfolgenden Tabelle (Tab.1) aufgeführten Komponenten in den dort aufgeführten Gewichtsanteilen. Es wird folgendermaßen verfahren:

Harz, Vernetzer und Zusatzstoffe werden bei Raumtemperatur gemischt und mit der vorgesehenen Menge Eisessig versetzt. Anschließend wird die erste Wassermenge ($H_2O$ I) portionsweise eingerührt. Man gibt sodann Katalysatorlösung und gegebenenfalls Lösemittel und weitere Lackhilfsmittel zu, homogenisiert kurze Zeit und verdünnt mit der zweiten Wassermenge ($H_2O$ II) in kleinen Portionen auf den Endfeststoffgehalt.

Die Dispersionen werden in einer anschließenden Vakuumdestillation von flüchtigen Lösemitteln befreit, wobei das destillativ entfernte Lösemittel mengenmäßig durch Wasser ersetzt wird. Danach wird die Dispersion filtriert.

Tab. 1

| Wässrige Bindemitteldispersionen (Gewichtsanteile in g) | | | |
|---|---|---|---|
| Dispersion | 1 | 2 | 3 |
| Harz 1 (Bsp. II. 1) | 911,3 | - | - |
| Harz 2 (Bsp. II. 2) | - | 878,8 | - |
| Harz 3 (Bsp. III. 3) | - | - | 1.120,- |
| Vernetzer 1 (Bsp. III.1) | 257,6 | 220,9 | - |
| Vernetzer 2 (Bsp. III.2) | 225,4 | 193,2 | - |
| Vernetzer 3 (Bsp III.3) | - | - | 351,5 |
| Plastilit 3060 [1] | 89,6 | 89,6 | - |
| Entschäumer [2] | 2,2 | 2,2 | 2,2 |
| Bleioctoat [3] | - | - | 22,4 |
| Isobutanol | - | 150,- | - |
| Eisessig | 5,7 | 17,8 | 26,- |
| $H_2O$ I | 756,- | 839,7 | 717,9 |
| $H_2O$ II | 1.153,9 | 1.760,- | 1.260,- |

[1] Polypropylenglykolverbindung, Fa. BASF

[2] 50 %-ige Lösung von Surfynol (Fa. Air Products) in Butylglykol

[3] Handelsübliche Lösung (24 % Pb)

V. Herstellung einer grauen Pigmentpaste

27,81 Teile Bisphenol A-diglycidylether, 1,44 Teile Xylol und 5,81 Teile Bisphenol A werden in Gegenwart von 0.002 Teilen Triphenylphosphin bei 150 - 160 °C bis zu einem EEW von 345 umgesetzt. Der Ansatz wird dann mit 21,61 Teilen Butylglykol verdünnt und auf 49 °C gekühlt. Dann wird eine Mischung aus 7,77 Teilen 9-Amino-3.6-dioxanonan-1-ol und 4,07 Teilen N,N-Dimethylaminopropylamin innerhalb 6 min zugegeben, worauf die Temperatur auf 110 °C steigt. Man hält die Mischung 1 Std. lang zwischen 110 und 115 °C bevor 6,45 Teile Butylglykol zugegeben werden und der Ansatz auf 77 °C gekühlt wird. Anschließend werden 14,9 Teile Nonylphenolglycidylether zugegeben. Die Temperatur steigt daraufhin auf 90 °C an und wird dort 1 Std. gehalten, bevor mit 10,03 Teilen Butylglykol verdünnt und gekühlt wird. Der Feststoffgehalt der dünnflüsigen Harzlösung liegt bei 60 %.

Zur Herstellung der Pigmentpaste werden zunächst 29,33 Teile Wasser, 1,59 Teile Essigsäure (90 %-ig) und 21,60 Teile der vorstehend beschriebenen Harzlösung vorgemischt. Nun werden 0,7 Teile Entschäumer[1], 0,5 Teile Ruß, 4,8 Teile basisches Bleipigment, 6,75 Teile Extender HEWP[2], 32,48 Teile Titandioxid (R 900) und 2,25 Teile Dibutylzinnoxid zugegeben, und die Mischung wird 30 min lang unter einem schnellainfenden Dissolverrührwerk vordispergiert. Anschließend wird die Mischung in einer Laborkleinmühle (Motor Mini Mill, Eiger Engineering Ltd. Great Britain) während 1 bis 1,5 Std. bis zu einer Hegmann-Feinheit von kleiner/gleich 12 dispergiert und mit weiterem Wasser auf die gewünschte Verarbeitungsviskosität fein eingestellt. Es resultiert eine sehr entmischungsstabile Pigmentpaste.

VI. Zubereitung der Elektrotauchbäder und Abscheidinng von Lackfilmen

Zur Prüfung als kathodisch abscheidbare Elektrotauchlacke werden die wässrigen Bindemitteldispersionen aus Tab. 1 in den unten jeweils angegebenen Gewichtsteilen mit entionisiertem Wasser und 10 %iger Essigsäure verdünnt. In die so verdünnte Bindemitteldispersion wird dann unter Rühren die jeweilige Pigmentpaste eingetragen.

Man läßt die Elektrotauchbäder 5 Tage bei Raumtemperatur unter Rühren altern. Die Abscheidung der Lackfilme erfolgt während 2 min bei der angegebenen Spannung auf kathodisch geschalteten zinkphosphatierten Stahlprüftafeln sowie auf kathodisch geschalteten nicht vorbehandelten Stahltafeln. Die Badtempera-

[1] "Tristar Antifoam" Tristar Chemical Co. Dallas, USA

[2] English China Glay Int. Great Britain

tur wird hierbei auf 27 °C gehalten. Die abgeschiedenen Naßfilme werden mit entionisiertem Wasser nachgespült und während 20 min. bei 165 °C eingebrannt.

Elektrotauchbad 1

2.325 Teile entionisiertes Wasser
3 Teile Essigsäure (10 %-ig)
2.100 Teile Dispersion 1 (Beispiel IV. Tab. 1) und
572 Teile Pigmentpaste (Beispiel V)

werden, wie oben beschrieben, in einen Elektrotauchlack überführt. Der Feststoffgehalt des Bades liegt bei 20 %.

Abscheidung und Prüfung der Filme:

| Schichtdicke: | 35 $\mu$m |
|---|---|
| Spannung: | 270 V |
| Verlauf[*] | 1 |
| Erichsen-Tiefung | 7 |
| Gitterschnitt[*] | 0 |

[*]Benotung: 0 bester Wert, 5 schlechtester Wert.

Die Salzsprühnebelbelastung auf nichtvorbehandeten Stahlblechen nach ASTM B 117 ergab nach 360 h eine Unterwanderung von 1,0 mm (gemessen vom Schnitt).

Elektrotauchbad 2

2.500 Teile entionisiertes Wasser
3 Teile Essigsäure (10 %ig)
1.925 Teile Dispersion 2 (Beispiel IV. Tab. 1)
572 Teile Pigmentpaste (Beispiel V)

Aus obenstehenden Komponenten wird in der bereits beschriebenen Weise ein Elektrotauchlackbad zubereitet. Der Feststoffgehalt liegt bei 20 %. Das Bad steht als Beispiel für einen erfindinngsgemäßen Lack mit einem geringen Anteil an organischen Lösemitteln.

Eine nach 5-tägiger Badalterung gezogene Lackprobe weist als einziges Lösemittel Bintylglykol in einer Menge von 0,5 Gewichts-% auf (gaschromatographisch bestimmt).

Abscheidung und Prüfung der Filme:

| Schichtdicke | 25 $\mu$m |
|---|---|
| Spannung | 320 V |
| Verlauf 1-2 | |
| Erichsen-Tiefung | 7,5 |
| Reverse Inpact (in-lb) | 40 |
| Biegung am konischen Dorn nach ISO-Norm (in cm) | 1 |
| Gitterschnitt | 0 |

Elektrotauchbad 3

2.400 Teile entionisiertes Wasser
3 Teile Essigsäure (10 %ig)
2.025 Teile Dispersion 3 (Beispiel IV, Tab. 1)
572 Teile Pigmentpaste (Beispiel V)

Aus den obenaufgeführten Komponenten wird ein Elektrotauchlackbad zubereitet.

Abscheidung und Prüfung der Filme:

EP 0 475 966 B1

| Schichtdicke: | 24 μm |
|---|---|
| Spannung: | 300 V |
| Verlauf | 2 |
| Erichsen-Tiefung | 8 |
| Reverse Inpact (in-lb) | 80 |
| Gitterschnitt | 0 |

Die Salzsprühnebelbelastung aus nicht vorbehandelten Stahlblechen nach ASTM ergab nach 360 h eine Unterwanderung von kleiner 1 mm (gemessen vom Schnitt).

**Patentansprüche**

1. Verfahren zur Beschichtung elektrisch leitfähiger Substrate, bei dem

(1) das Substrat in einem wäßrigen Elektrotauchlack, der als Bindemittel mindestens ein kationisches, aminmodifiziertes Epoxidharz enthält, eingetaucht wird, wobei das kationische, aminmodifizierte Epoxidharz erhältlich ist, indem

(A) eine Verbindung, die pro Molekül durchschnittlich 1,0 bis 5,0 vorzugsweise 1,2 bis 2,5, besonders bevorzingt 2,0 Epoxidgruppen enthält oder eine Mischung aus solchen Verbindungen und

(B) ein organisches Amin oder ein Gemisch aus organischen Aminen und

(C) ein urethangruppenhaltiges Addukt, das erhältlich ist, indem

(c1) ein Polyether- oder Polyesterpolyol mit einem zahlenmittleren Molekulargewicht von 400 bis 5000, vorzugsweise 600 bis 2000, oder ein Gemisch aus solchen Polyether- und/oder Polyesterpolyolen,

(c2) ein Polyisocyanat oder ein Gemisch aus Polyisocyanaten und

(c3) eine Verbindung, die mindestens ein gegenüber Isocyanatgruppen reaktives Wasserstoffatom und mindestens eine Ketimingruppe im Molekül enthält oder ein Gemisch aus solchen Verbindungen

miteinander umgesetzt werden und/oder

(D) ein urethangruppenhaltiges Addukt, das erhältlich ist, indem in der Komponente (C) mindestens eine Ketimingruppe durch Hydrolyse in eine primäre Aminogruppe überführt wird,

in einem solchen Mengenverhältnis miteinander umgesetzt werden, daß 20 bis 90, vorzugsweise 60 bis 80 % der Epoxidgruppen der Komponente (A) mit der Komponente (B) und die verbleibenden Epoxidgruppen mit der Komponente (C) und/oder (D) umgesetzt werden und das so erhaltene Reaktionsprodukt - falls noch notwendig - zumindest teilweise protoniert wird,

(2) das Substrat als Kathode geschaltet wird,

(3) durch Gleichstrom ein Film auf dem Substrat abgeschieden wird,

(4) das Substrat aus dem Elektrotauchlack entfernt wird und

(5) der abgeschiedene Lackfilm eingebrannt wird,

dadurch gekennzeichnet, daß als Komponente (A) eine Verbindung eingesetzt wird, die erhältlich ist, indem

(i) eine Diepoxidverbindung oder ein Gemisch aus Diepoxidverbindungen mit einem Epoxidäquivalentgewicht unter 2000 mit

(ii) einer Verbindung, die eine phenolische Hydroxylgruppe oder eine Thiolgruppen im Molekül enthält,

so umgesetzt wird, daß ein Reaktionsprodukt erhalten wird, in dem die Komponenten (i) und (ii) in einem Molverhältnis von 2:1 bis 10:1, vorzugsweise 2:1 bis 4:1, besonders bevorzugt 2:1, eingebaut sind.

2. Wäßriger Lack, der als Bindemittel ein kationisches, aminmodifiziertes Epoxidharz enthält, das erhältlich ist, indem

(A) eine Verbindung, die pro Molekül durchschnittlich 1,0 bis 5,0, vorzugsweise 1,2 bis 2,5, besonders bevorzugt 2,0 Epoxidgruppen enthält oder eine Mischung aus solchen Verbindungen und

(B) ein organisches Amin oder ein Gemisch aus organischen Aminen und

(C) ein urethangruppenhaltiges Addukt, das erhältlich ist, indem

(c1) ein Polyether- oder Polyesterpolyol mit einem zahlenmittleren Molekulargewicht von 400 bis 5000, vorzugsweise 600 bis 2000, oder ein Gemisch aus solchen Polyether- und/oder Polyester-

12

polyolen,

(c2) ein Polyisocyanat oder ein Gemisch aus Polyisocyanaten und

(c3) eine Verbindung, die mindestens ein gegenüber Isocyanatgruppen reaktives Wasserstoffatom und mindestens eine Ketimingruppe im Molekül enthält oder ein Gemisch aus solchen Verbindungen

miteinander umgesetzt werden und/oder

(D) ein urethangruppenhaltiges Addukt, das erhältlich ist, indem in der Komponente (C) mindestens eine Ketimingruppe durch Hydrolyse in eine primäre Aminogruppe überführt wird,

in einem solchen Mengenverhältnis miteinander umgesetzt werden, daß 20 bis 90, vorzugsweise 60 bis 80 % der Epoxidgruppen der Komponente (A) mit der Komponente (B) und die verbleibenden Epoxidgruppen mit der Komponente (C) und/oder (D) umgesetzt werden und das so erhaltene Reaktionsprodukt - falls noch notwendig - zumindest teilweise protoniert wird, dadurch gekennzeichnet, daß als Komponente (A) eine Verbindung eingesetzt wird, die erhältlich ist, indem

(i) eine Diepoxidverbindung oder ein Gemisch aus Diepoxidverbindungen mit einem Epoxidäquivalentgewicht unter 2000 mit

(ii) einer Verbindung, die eine phenolische Hydroxylgruppe oder eine Thiolgruppe im Molekül enthält,

so umgesetzt wird, daß ein Reaktionsprodukt erhalten wird, in dem die Komponenten (i) und (ii) in einem Molverhältnis von 2:1 bis 10:1, vorzugsweise 2:1 bis 4:1, besonders bevorzugt 2:1, eingebaut sind.

3. Verfahren oder Lack nach Anspruch 1 oder 2, dadurch gekennzeichnet, daß das Addukt (C) erhältlich ist, indem als Komponente (c1) ein Polyether- oder Polyesterdiol oder ein Gemisch aus Polyether- und/oder Polyesterdiolen, als Komponente (c2) ein Diisocyanat oder ein Gemisch aus Diisocyanaten und als Komponente (c3) eine Verbindung, die ein gegenüber Isocyanatgruppen reaktives Wasserstoffatom und mindestens eine Ketimingruppe im Molekül enthält oder ein Gemisch aus solchen Verbindungen eingesetzt wird und die Komponenten (c1), (c2) und (c3) in einem solchen Mengenverhältnis miteinander umgesetzt werden, daß das Addukt (C) keine freien Isocyanatgruppen enthält.

4. Verfahren oder Lack nach einem der Ansprüche 1 bis 3, dadurch gekennzeichnet, daß das Addukt (C) ein zahlenmittleres Molekulargewicht von 600 bis 6000, vorzugsweise 1000 bis 2500, aufweist.

5. Verfahren oder Lack nach einem der Ansprüche 1 bis 4, dadurch gekennzeichnet, daß das Addukt (C) erhältlich ist, indem als Komponente (c3) eine Verbindung, die eine Hydroxylgruppe und mindestens eine Ketimingruppe im Molekül enthält, oder ein Gemisch aus solchen Verbindungen eingesetzt wird.

6. Verfahren oder Lack nach einem der Ansprüche 1 bis 5, dadurch gekennzeichnet, daß das kationische, aminmodifizierte Epoxidharz erhältlich ist, indem die Komponenten (A), (B) und (C) in einem organischen Lösemittel oder Lösemittelgemisch in Gegenwart von Wasser und/oder einer Brønsted-Säure vorzugsweise bei erhöhter Temperatur miteinander umgesetzt werden und das Reaktionsprodukt zumindest teilweise protoniert wird.

7. Verfahren zur Herstellung eines kationischen, aminmodifizierten Epoxidharzes, bei dem

(A) eine Verbindung, die pro Molekül durchschnittlich 1,0 bis 5,0, vorzugsweise 1,2 bis 2,5, besonders bevorzugt 2,0 Epoxidgruppen enthält oder eine Mischung aus solchen Verbindungen und

(B) ein organisches Amin oder ein Gemisch aus organischen Aminen und

(C) ein urethangruppenhaltiges Addukt, das erhältlich ist, indem

(c1) ein Polyether- oder Polyesterpolyol mit einem zahlenmittleren Molekulargewicht von 400 bis 5000, vorzugsweise 600 bis 2000, oder ein Gemisch aus solchen Polyether- und/oder Polyesterpolyolen,

(c2) ein Polyisocyanat oder ein Gemisch aus Polyisocyanaten und

(c3) eine Verbindung, die mindestens ein gegenüber Isocyanatgruppen reaktives Wasserstoffatom und mindestens eine Ketimingruppe im Molekül enthält oder ein Gemisch aus solchen Verbindungen

miteinander umgesetzt werden und/oder

(D) ein urethangruppenhaltiges Addukt, das erhältlich ist, indem in der Komponente (C) mindestens eine Ketimingruppe durch Hydrolyse in eine primäre Aminogruppe überführt wird,

in einem solchen Mengenverhältnis miteinander umgesetzt werden, daß 20 bis 90, vorzugsweise 60 bis

13

EP 0 475 966 B1

80 % der Epoxidgruppen der Komponente (A) mit der Komponente (B) und die verbleibenden Epoxidgruppen mit der Komponente (C) und/oder (D) umgesetzt werden und das so erhaltene Reaktionsprodukt - falls noch notwendig - zumindest teilweise protoniert wird, dadurch gekennzeichnet, daß als Komponente (A) eine Verbindung eingesetzt wird, die erhältlich ist, indem

(i) eine Diepoxidverbindung oder ein Gemisch aus Diepoxidverbindungen mit einem Epoxidäquivalentgewicht unter 2000 mit

(ii) einer Verbindung, die eine phenolische Hydroxylgruppe oder eine Thiolgruppe im Molekül enthält,

so umgesetzt wird, daß ein Reaktionsprodukt erhalten wird, in dem die Komponenten (i) und (ii) in einem Molverhältnis von 2:1 bis 10:1, vorzugsweise 2:1 bis 4:1, besonders bevorzugt 2:1, eingebaut sind.

8. Kationisches, aminmodifiziertes Epoxidharz, dadurch gekennzeichnet, daß es nach dem Verfahren gemäß Anspruch 7 herstellbar ist.

9. Verfahren oder kationisches, aminmodifiziertes Epoxidharz nach Anspruch 7 oder 8, dadurch gekennzeichnet, daß das Addukt (C) erhältlich ist, indem als Komponente (c1) ein Polyether- oder Polyesterdiol oder ein Gemisch aus Polyether- und/oder Polyesterdiolen, als Komponente (c2) ein Diisocyanat oder ein Gemisch aus Diisocyanaten und als Komponente (c3) eine Verbindung, die ein gegenüber Isocyanatgruppen reaktives Wasserstoffatom und mindestens eine Ketimingruppe im Molekül enthält oder ein Gemisch aus solchen Verbindungen eingesetzt wird und die Komponenten (c1), (c2) und (c3) in einem solchen Mengenverhältnis miteinander umgesetzt werden, daß das Addukt (C) keine freien Isocyanatgruppen enthält.

10. Verfahren oder kationisches, aminmodifiziertes Epoxidharz nach einem der Ansprüche 7 bis 9, dadurch gekennzeichnet, daß das Addukt (C) ein zahlenmittleres Molekulargewicht von 600 bis 6000, vorzugsweise 1000 bis 2500, aufweist.

## Claims

1. Process for coating electrically conductive substrates, in which

(1) the substrate is dipped into an aqueous electro-dipcoating composition, which contains at least one cationic, amine-modified epoxy resin as binder, the cationic, amine-modified epoxy resin being obtainable by reacting

(A) a compound which contains on average 1.0 to 5.0, preferably 1.2 to 2.5 and particularly preferentially 2.0 epoxy groups per molecule, or a mixture of such compounds, and

(B) an organic amine or a mixture of organic amines and

(C) an adduct containing urethane groups, which is obtainable by reacting

(c1) a polyether- or polyester-polyol with a number-average molecular weight of 400 to 5,000, preferably 600 to 2,000, or a mixture of such polyether- and/or polyester-polyols,

(c2) a polyisocyanate or a mixture of polyisocyanates and

(c3) a compound which contains at least one hydrogen atom which is reactive towards isocyanate groups and at least one ketimine group in the molecule, or a mixture of such compounds,

with one another, and/or

(D) a urethane group-containing adduct, which is obtainable by converting at least one ketimine group in component (C) to a primary amino group by hydrolysis

with one another in a relative proportion such that 20 to 90, preferably 60 to 80% of the epoxy groups of component (A) are reacted with component (B) and the remaining epoxy groups are reacted with component (C) and/or (D), and - if still necessary - at least partially protonating the reaction product thus obtained,

(2) the substrate is connected as cathode,

(3) a film is deposited on the substrate by means of direct current,

(4) the substrate is removed from the electro-dipcoating composition and

(5) the deposited coating film is baked, characterized in that as component (A) a compound is used which is obtainable by reacting

(i) a diepoxide compound or a mixture of diepoxide compounds having an epoxide equivalent weight below 2,000, with

14

EP 0 475 966 B1

(ii) a compound which contains one phenolic hydroxyl group or one thiol groups [sic] in the molecule,

in such a manner that a reaction product is obtained in which the components (i) and (ii) are incorporated in a molar ratio of 2:1 to 10:1, preferably 2:1 to 4:1 and particularly preferentially 2:1.

2. Aqueous coating composition which contains as binder a cationic, amine-modified epoxy resin, which is obtainable by reacting

(A) a compound which contains on average 1.0 to 5.0, preferably 1.2 to 2.5 and particularly preferentially 2.0 epoxy groups per molecule, or a mixture of such compounds, and

(B) an organic amine or a mixture of organic amines and

(C) an adduct containing urethane groups, which is obtainable by reacting

(c1) a polyether- or polyester-polyol with a number-average molecular weight of 400 to 5,000, preferably 600 to 2,000, or a mixture of such polyether- and/or polyester-polyols,

(c2) a polyisocyanate or a mixture of polyisocyanates and

(c3) a compound which contains at least one hydrogen atom which is reactive towards isocyanate groups and at least one ketimine group in the molecule, or a mixture of such compounds,

with one another, and/or

(D) a urethane group-containing adduct, which is obtainable by converting at least one ketimine group in component (C) to a primary amino group by hydrolysis

with one another in a relative proportion such that 20 to 90, preferably 60 to 80% of the epoxy groups of component (A) are reacted with component (B) and the remaining epoxy groups are reacted with component (C) and/or (D), and - if still necessary - at least partially protonating the reaction product thus obtained, characterized in that as component (A) a compound is used which is obtainable by reacting

(i) a diepoxide compound or a mixture of diepoxide compounds having an epoxide equivalent weight below 2,000, with

(ii) a compound which contains one phenolic hydroxyl group or one thiol group in the molecule,

in such a manner that a reaction product is obtained in which the components (i) and (ii) are incorporated in a molar ratio of 2:1 to 10:1, preferably 2:1 to 4:1 and particularly preferentially 2:1.

3. Process or coating composition according to Claim 1 or 2, characterized in that the adduct (C) is obtainable by using a polyether- or polyester-diol or a mixture of polyether- and/or polyester-diols as component (c1), a diisocyanate or a mixture of diisocyanates as component (c2) and a compound which contains a hydrogen atom which is reactive towards isocyanate groups and at least one ketimine group in the molecule, or a mixture of such compounds as component (c3) and reacting the components (c1), (c2) and (c3) with one another in a relative proportion such that the adduct (C) contains no free isocyanate groups.

4. Process or coating composition according to one of Claims 1 to 3, characterized in that the adduct (C) has a number-average molecular weight of 600 to 6,000, preferably 1,000 to 2,500.

5. Process or coating composition according to one of Claims 1 to 4, characterized in that the adduct (C) is obtainable by using a compound which contains a hydroxyl group and at least one ketimine group in the molecule, or a mixture of such compounds, as component (c3).

6. Process or coating composition according to one of Claims 1 to 5, characterized in that the cationic, amine-modified epoxy resin is obtainable by reacting the components (A), (B) and (C) with one another, preferably at elevated temperature, in an organic solvent or solvent mixture in the presence of water and/or a Brønsted acid and at least partially protonating the reaction product.

7. Process for the preparation of a cationic, amine-modified epoxy resin, in which

(A) a compound which contains on average 1.0 to 5.0, preferably 1.2 to 2.5 and particularly preferentially 2.0 epoxy groups per molecule, or a mixture of such compounds, and

(B) an organic amine or a mixture of organic amines and

(C) an adduct containing urethane groups, which is obtainable by reacting

(c1) a polyether- or polyester-polyol with a number-average molecular weight of 400 to 5,000, preferably 600 to 2,000, or a mixture of such polyether- and/or polyester-polyols,

(c2) a polyisocyanate or a mixture of polyisocyanates and

15

(c3) a compound which contains at least one hydrogen atom which is reactive towards isocyanate groups and at least one ketimine group in the molecule, or a mixture of such compounds,

are reacted with one another, and/or

(D) a urethane group-containing adduct, which is obtainable by converting at least one ketimine group in component (C) to a primary amino group by hydrolysis

are reacted with one another in a relative proportion such that 20 to 90, preferably 60 to 80% of the epoxy groups of component (A) are reacted with component (B) and the remaining epoxy groups are reacted with component (C) and/or (D), and - if still necessary - the reaction product thus obtained is at least partially protonated, characterized in that as component (A) a compound is used which is obtainable by reacting

(i) a diepoxide compound or a mixture of diepoxide compounds having an epoxide equivalent weight below 2,000, with

(ii) a compound which contains one phenolic hydroxyl group or one thiol group in the molecule,

in such a manner that a reaction product is obtained in which the components (i) and (ii) are incorporated in a molar ratio of 2:1 to 10:1, preferably 2:1 to 4:1 and particularly preferentially 2:1.

8. Cationic, amine-modified epoxy resin, characterized in that it can be prepared by the process according to Claim 7.

9. Process or cationic, amine-modified epoxy resin according to Claim 7 or 8, characterized in that the adduct (C) is obtainable by using a polyether- or polyester-diol or a mixture of polyether- and/or polyester-diols as component (c1), a diisocyanate or a mixture of diisocyanates as component (c2) and a compound which contains a hydrogen atom which is reactive towards isocyanate groups and at least one ketimine group in the molecule, or a mixture of such compounds, as component (c3) and reacting the components (c1), (c2) and (c3) with one another in a relative proportion such that the adduct (C) contains no free isocyanate groups.

10. Process or cationic, amine-modified epoxy resin according to one of Claims 7 to 9, characterized in that the adduct (C) has a number-average molecular weight of 600 to 6,000, preferably 1,000 to 2,500.

**Revendications**

1. Procédé pour enduire des substrats électroconducteurs, dans lequel

(1) le substrat est trempé dans un vernis aqueux déposable par électrophorèse qui contient en tant que liant au moins une résine époxy cationique modifiée par une amine, la résine époxy cationique modifiée par une amine étant obtenue par le fait que

(A) un composé qui contient en moyenne 1,0 à 5,0, de préférence 1,2 à 2,5, de manière très préférentielle 2,0 groupes époxy par molécule ou un mélange de composés de ce type et

(B) une amine organique ou un mélange d'amines organiques et

(C) un produit d'addition contenant des groupes uréthane que l'on obtient en faisant réagir les uns avec les autres

(c1) un polyol de polyéther ou de polyester ayant un poids moléculaire moyen de 400 a 5000, de préférence de 600 à 2000, ou un mélange de polyols de polyéther et/ou de polyester de ce type,

(c2) un polyisocyanate ou un mélange de polyisocyanates et

(c3) un composé qui contient dans la molécule au moins un atome d'hydrogène entrant en réaction avec des groupes isocyanates et au moins un groupe cétimine ou un mélange de composés de ce type

(D) un produit d'addition contenant des groupes uréthane, que l'on obtient en transformant par hydrolyse au moins un groupe cétimine en un groupe amine primaire dans le composant (C),

sont mis en réaction les uns avec les autres dans un rapport de masse tel que 20 à 90, de préférence 60 à 80 % des groupes époxy du composé (A) entrent en réaction avec le composé (B) et les groupes époxy restants réagissant avec les composés (C) et/ou (D) et que le produit réactionnel ainsi obtenu - au cas où ce serait encore nécessaire - est au moins partiellement soumis a protonation,

(2) le substrat fait office de cathode,

(3) une pellicule est déposée sur le substrat à l'aide d'un courant continu,

(4) le substrat est retiré du vernis déposable par électrophorèse et

EP 0 475 966 B1

(5) la pellicule de vernis déposée est cuite,

caractérisé en ce qu'on utilise en tant que composant (A) un composé que l'on obtient en faisant réagir

(i) un composé diépoxy ou un mélange de composés diépoxy ayant un poids en équivalents d'époxy inférieur à 2000 avec

(ii) un composé qui contient un groupe hydroxy phénolique ou un groupe thiol dans la molécule,

de telle sorte qu'on obtienne un produit réactionnel dans lequel sont insérés les composants (i) et (ii) dans un rapport molaire de 2:1 à 10:1, de préférence 2:1 à 4:1, de manière très préférentielle 2:1.

2. Vernis aqueux qui contient en tant que liant une résine époxy cationique modifiée par une amine, étant obtenue par le fait que

(A) un composé qui contient en moyenne 1,0 à 5,0, de préférence 1,2 a 2,5, de manière très préférentielle 2,0 groupes époxy par molécule ou un mélange de composés de ce type et

(B) une amine organique ou un mélange d'amines organiques et

(C) un produit d'addition contenant des groupes uréthane que l'on obtient en faisant réagir les uns avec les autres

(c1) un polyol de polyéther ou de polyester ayant un poids moléculaire moyen de 400 à 5000, de préférence de 600 à 2000, ou un mélange de polyols de polyéther et/ou de polyester de ce type,

(c2) un polyisocyanate ou un mélange de polyisocyanates et

(c3) un composé qui contient dans la molécule au moins un atome d'hydrogène entrant en réaction avec des groupes isocyanates et au moins un groupe cétimine ou un mélange de composés de ce type

et/ou

(D) un produit d'addition contenant des groupes uréthane, que l'on obtient en transformant par hydrolyse au moins un groupe cétimine en un groupe amine primaire dans le composant (C),

sont mis en réaction les uns avec les autres dans un rapport de masse tel que 20 à 90, de préférence 60 à 80 % des groupes époxy du composé (A) entrent en réaction avec le composé (B) et les groupes époxy restants réagissant avec les composés (C) et/ou (D) et que le produit réactionnel ainsi obtenu - au cas où ce serait encore nécessaire - est au moins partiellement soumis à protonation, caractérisé en ce qu'on utilise en tant que composant (A) un composé que l'on obtient en faisant réagir

(i) un composé diépoxy ou un mélange de composés diépoxy ayant un poids en équivalents d'époxy inférieur à 2000 avec

(ii) un composé qui contient un groupe hydroxy phénolique ou un groupe thiol dans la molécule,

de telle sorte qu'on obtienne un produit réactionnel dans lequel sont insérés les composants (i) et (ii) dans un rapport molaire de 2:1 à 10:1, de préférence 2:1 à 4:1, de manière très préférentielle 2:1.

3. Procédé ou vernis selon la revendication 1 ou 2, caractérisés en ce que le produit d'addition (C) est obtenu par le fait que l'on utilise en tant que composant (c1) un diol de polyéther ou polyester ou un mélange de diols de polyéther et/ou de polyester, en tant que composant (c2) un diisocyanate ou un mélange de diisocyanates et en tant que composant (c3) un composé qui contient dans la molécule un atome d'hydrogène entrant en réaction avec des groupes isocyanates et au moins un groupe cétimine ou un mélange de composés de ce type et que les composés (c1), (c2) et (c3) entrent en réaction les uns avec les autres dans un rapport de masse tel que le produit d'addition (C) ne contient aucun groupe isocyanate libre.

4. Procédé ou vernis selon l'une quelconque des revendications 1 à 3, caractérisé en ce que le produit d'addition (C) présente un poids moléculaire moyen de 600 à 6000, de préférence de 1000 à 2500.

5. Procédé ou vernis selon l'une quelconque des revendications 1 à 4, caractérisé en ce que le produit d'addition (C) est obtenu par le fait qu'on utilise en tant que composant (c3) un composé qui contient dans la molécule un groupe hydroxyle et au moins un groupe cétimine ou un mélange de composés de ce type.

6. Procédé ou vernis selon l'une quelconque des revendications 1 à 5, caractérisé en ce que la résine époxy cationique modifiée par une amine est obtenue par le fait que les composants (A), (B) et (C) sont mis en réaction les uns avec les autres, de préférence à température élevée, dans une solution organique ou un mélange de solutions organiques en présence d'eau et/ou d'un acide de Brønsted et que le produit réactionnel est au moins partiellement protonisé.

17

**7.** Procédé pour la production d'une résine époxy cationique modifiée par une amine dans lequel
(A) un composé qui contient en moyenne 1,0 à 5,0, de préférence 1,2 à 2,5, de manière très préférentielle 2,0 groupes époxy par molécule ou un mélange de composés de ce type et
(B) une amine organique ou un mélange d'amines organiques et
(C) un produit d'addition contenant des groupes uréthane que l'on obtient en faisant réagir les uns avec les autres
(c1) un polyol de polyéther ou de polyester ayant un poids moléculaire moyen de 400 à 5000, de préférence de 600 à 2000, ou un mélange de polyols de polyéther et/ou de polyester de ce type,
(c2) un polyisocyanate ou un mélange de polyisocyanates et
(c3) un composé qui contient dans la molécule un atome d'hydrogène entrant en réaction avec des groupes isocyanates et au moins un groupe cétimine ou un mélange de composée de ce type
et/ou
(D) un produit d'addition contenant des groupes uréthane, que l'on obtient en transformant par hydrolyse au moins un groupe cétimine en un groupe amine primaire dans le composant (C),
sont mis en réaction les uns avec les autres dans un rapport de masse tel que 20 à 90, de préférence 60 à 80 % des groupes époxy du composé (A) entrent en réaction avec le composé (B) et les groupes époxy restants réagissant avec les composés (C) et/ou (D) et que le produit réactionnel ainsi obtenu - au cas où ce serait encore nécessaire - est au moins partiellement soumis à protonation, caractérisé en ce qu'en tant que composant (A), on utilise un composé que l'on obtient en faisant réagir
(i) un composé diépoxy ou un mélange de composés diépoxy ayant un poids en équivalents d'époxy inférieur à 2000 avec
(ii) un composé qui contient un groupe hydroxy phénolique ou un groupe thiol dans la molécule,
de telle sorte qu'on obtienne un produit réactionnel dans lequel sont insérés les composants (i) et (ii) dans un rapport molaire de 2:1 à 10:1, de préférence de 2:1 à 4:1, de manière très préférentielle de 2:1.

**8.** Résine époxy cationique modifiée par une amine, caractérisée en ce qu'elle est produite selon le procédé de la revendication 7.

**9.** Procédé ou résine époxy cationique modifiée par une amine selon la revendication 7 ou 8, caractérisé en ce que le produit d'addition (C) est obtenu par le fait qu'on utilise, en tant que composant (c1) un diol de polyéther ou polyester ou un mélange de diols de polyéther et/ou de polyester, en tant que composant (c2) un diisocyanate ou un mélange de diisocyanates et en tant que composant (c3) un composé qui contient dans la molécule un atome d'hydrogène entrant en réaction avec des groupes isocyanates et au moins un groupe cétimine ou un mélange de composés de ce type et que les composés (c1), (c2) et (c3) entrent en réaction les uns avec les autres dans un rapport de masse tel que le produit d'addition (C) ne contient aucun groupe isocyanate libre.

**10.** Procédé ou résine époxy cationique modifiée par une amine selon l'une quelconque des revendications 7 à 9, caractérisé en ce que le produit d'addition (C) présente un poids moléculaire moyen de 600 à 6000, de préférence de 1000 à 2500.